**Europäisches Patentamt**

**European Patent Office**

**Office européen des brevets**

(19)

(11) Veröffentlichungsnummer: **0 250 608**
**B1**

(12)

# EUROPÄISCHE PATENTSCHRIFT

(45) Veröffentlichungstag der Patentschrift:
07.03.90

(51) Int. Cl.⁴: **G01C 19/38**

(21) Anmeldenummer: **86108297.2**

(22) Anmeldetag: **18.06.86**

(54) **Verfahren und Einrichtung zur Azimut-Winkelbestimmung mit Hilfe eines Strapdown-Kreisels.**

(43) Veröffentlichungstag der Anmeldung:
**07.01.88 Patentblatt 88/1**

(45) Bekanntmachung des Hinweises auf die Patenterteilung:
**07.03.90 Patentblatt 90/10**

(84) Benannte Vertragsstaaten:
**AT CH DE FR GB IT LI NL**

(56) Entgegenhaltungen:
**EP-A- 0 077 491**
**EP-A- 0 090 718**
**EP-A- 0 106 066**

(73) Patentinhaber: **LITEF GmbH, Lörracher Strasse 18,
D-7800 Freiburg/Br.(DE)**

(72) Erfinder: **Handrich, Eberhard, Dr. Dipl.-Phys.,
Keltenring 104, D-7815 Kirchzarten(DE)**
Erfinder: **Kirst, Bertold, Kirchenfeld 35,
D-7802 Merzhausen(DE)**
Erfinder: **Sinclair, Brian, Schwarzwaldstrasse 14,
D-7801 Ehrenkirchen(DE)**

(74) Vertreter: **Patentanwälte TER MEER - MÜLLER -
STEINMEISTER, Mauerkircherstrasse 45,
D-8000 München 80(DE)**

ACTORUM AG

**Beschreibung**

Die Erfindung betrifft ein Verfahren und eine Einrichtung zur Azimut-Winkelbestimmung mit Hilfe eines für Strapdown-Anwendung geeigneten Kreisels, gemäß dem Oberbegriff von Anspruch 1. Die Erfindung bezieht sich außerdem auf eine Einrichtung mit einer Kreiselanordnung zur Durchführung des Verfahrens.

Aus der Druckschrift DE-A2 2 903 282 ist ein Gerät zur automatischen Bestimmung der Nordrichtung bekannt, bei dem eine Verfälschung der Messung aufgrund von Störeinflüssen durch eine Mehr-Positionenmessung mit anschließender kompensierender Auswertung wenigstens teilweise unterbunden wird. Bei einer ersten Messung wird der Azimutwinkel $\psi$ zwischen der Kreiselachse und Nord in einer Ausgangsposition bestimmt. Anschließend wird das Kreiselsystem um die Spinachse oder Kreiseldrallachse um 180° gedreht, und bei einer zweiten Messung wird der Azimutwinkel $(\psi+180°)$ zwischen der Kreiselmeßachse und Nord bestimmt. Die Kreiseldriften werden durch arithmetische Mittelwertbildung in einer Signalaufnahme- und -verarbeitungseinheit eliminiert. Bei diesem bekannten Gerät lassen sich jedoch die temperaturbedingten Kreiselfehler nur teilweise beseitigen. Dies beruht darauf, daß der Temperaturgang der Kreiselparameter bzw. der Meßsignale keine lineare Abhängigkeit, sondern insbesondere in der "Einlaufphase" einen exponentiellen Verlauf zeigen. Kurz nach dem Einschalten eines Kreiselkompasses sind nämlich das Driftverhalten und andere Kreiselfehler nicht stabil; sie ändern sich zeitlich in erster Linie aufgrund einer Temperaturabhängigkeit. Daher wird bei herkömmlichen Kreiselsystemen für die Nordsuche relativ viel Zeit benötigt oder es muß bei bekannten, schnellausrichtenden Nordfindern erst eine Ausrichtung zwischen einer Meßrichtung des Nordfinders und einer Teillinie vorgenommen werden.

In der Druckschrift EP-A 0 106 066 ist weiterhin ein Gerät zur Bestimmung des Azimutwinkels beschrieben, bei dem der Einfluß von Störbewegungen um die Eingangsachsen eines Kreisels reduziert wird. Dies wird unter anderem dadurch erreicht, daß der Kreisel und zwei Beschleunigungsmesser, die senkrecht zueinander und etwa senkrecht zur Kreiselachse Beschleunigungskräfte messen, gehäusefest angeordnet sind und durch Rechenoperationen ein Referenz-Koordinatensystem definiert wird. Die von den Beschleunigungsmessern gemessenen Ausgangssignale ergeben Abweichungssignale, die zur Korrektur einer eventuellen Fehlausrichtung des Referenz-Koordinatensystems, gegebenenfalls einer virtuellen Plattform dienen.

Des weiteren ist aus der deutschen Patentschrift DE-A 3 141 405 ein verbessertes Verfahren zur raschen Azimut-Winkelbestimmung bekannt, bei dem zusätzlich eine dritte Messung in der Ausgangsposition, d.h. in einer der ersten Messung entsprechenden Stellung des Kreisels, erfolgt. Unter Annahme und Vorgabe eines zeitlich exponentiellen Verlaufs der Meßsignale wird in der Verarbeitungseinheit ein gewichtetes Mittel zwischen den Meßwerten der ersten und dritten Messung derart gebildet, daß die Mittelwerte weitgehend den Werten im Zeitraum der zweiten Messung entsprechen. Dieses Dreipositionen-Meßverfahren läßt sich sehr rasch durchführen und es wird eine gute Kompensation von Störeinflüssen erreicht.

Leider ist auch das verbesserte Dreipositionen-Meßverfahren noch an einer Reihe von Bedingungen gebunden, die sich in der Praxis insbesondere bei mobilem Einsatz nur schwer erfüllen lassen. Zum einen muß die Kreiseldrallachse (Spinachse) mit hoher Genauigkeit vertikal ausgerichtet sein. Zum anderen führen bereits geringste Störungen der Standebene des Meßgeräts zur Verfälschung des Ergebnisses. Hier ist beispielsweise zu berücksichtigen, daß während der an sich schon sehr kurzen Meßzeit von ca. 2 Minuten die Erddrehung bereits einer Bewegung eines Geräteträgers, beispielsweise eines Stativs, d.h. eine "Verkippung" von ca. 8 mm entspricht. Wegen der häufig erforderlichen Meßgenauigkeit müßte aber diese Trägerbewegung auf Tausendstel Millimeter genau bestimmt werden können. Es führt also bereits ein minimales Einsinken beispielsweise eines Stativfußes zu ungültigen Ergebnissen. Selbstredend ist damit ein Messen auf einem fahrenden Fahrzeug unmöglich. Zu berücksichtigen sind überdies fast unvermeidliche Stoß- und Vibrationsbelastungen. Auch aus diesem Grund ist es häufig nicht möglich, eine Nordbestimmung mit hoher Genauigkeit zu Ende zu führen, wenn davon ausgegangen werden muß, daß das Gerät während des Meßvorgangs auch nur geringfügig bewegt wurde.

Ausgehend von dem in der Druckschrift DE-A 3 141 405 beschriebenen Drei-Positionen-Meßverfahren liegt der Erfindung die Aufgabe zugrunde, eine rasche Azimut-Winkelbestimmung auch dann zu ermöglichen, wenn das Meßgerät selbst nicht in absoluter Ruhe verharren kann oder geringfügig schief aufgestellt worden ist.

Der im Patentanspruch 1 enthaltene Erfindungsgedanke geht bei einem Verfahren zur raschen Azimut-Winkelbestimmung unter Verwendung eines für Strapdown-Anwendung geeigneten Kreisels, bei dem rechnergesteuert und automatisch durch eine erste Messung der Azimut-Winkel zwischen einer Kreiselmeßachse und Nord in einer Ausgangsposition, bei einer zweiten Messung in einer um 180° um die Kreiseldrallachse gedrehten Position der Azimut-Winkel zwischen der Kreiselmeßachse und Nord bestimmt und eine dritte Messung in der Ausgangsposition entsprechend der ersten Messung durchgeführt werden und anschließend unter der Annahme und Vorgabe eines zeitlich exponentiellen Verlaufs der Kreiselmeßsignale in einer Signalaufnahme- und -verarbeitungseinheit ein gewichtetes Mittel zwischen den Meßwerten der ersten und dritten Messung derart gebildet wird, daß die Mittelwerte weitgehend den Werten im Zeitraum der zweiten Messung entsprechen, dahin, daß auf den Kreisel wirkende Beschleunigungskräfte in zwei senkrecht zueinander und etwa senkrecht zur Kreiseldrallachse stehenden Richtungen gemessen werden, die Mittelwertbildung in analoger Weise auf die Meßwerte der Beschleunigungskräfte angewendet und die gemittelten Meßwerte zur Festlegung einer Horizontreferenz benutzt werden, um schließlich die gemessene und durch korrigierte Mittelwertbildung erhaltene Kreiselinformation auf der Grundlage der Horizontreferenz zu korrigieren.

Die Patentansprüche 3 und 4 sind auf eine Einrichtung und eine Anwendung des erfindungsgemäßen Verfahrens, insbesondere auf einen Theodoliten als Meßgerät gerichtet.

Vorteilhafte Weiterbildungen und Ergänzungen des Erfindungsgedankens sind in abhängigen Patentansprüchen gekennzeichnet.

Gegenüber den bekannten Verfahren zur raschen Bestimmung des Azimutwinkels bzw. zur Bestimmung der Richtung von geographisch Nord hat das Verfahren gemäß der Erfindung eine Reihe von nachstehend aufgeführten Vorteilen, die für den praktischen Einsatz als unentbehrlich erscheinen:

- Aus der mittels der Beschleunigungsmesser ermittelten Horizontinformation läßt sich die mittels Mehrpositions-Ausrichtung gemessene und gemittelte Kreiselinformation korrigieren, so daß die Kreiseldrallachse nicht mit hoher Genauigkeit vertikal ausgerichtet sein muß.
- Die Meßsignale der hinsichtlich ihrer Meßrichtungen senkrecht zueinander angeordneten Beschleunigungsmesser können dazu verwendet werden, starke Stöße auf das Meßsystem zu erfassen und anzuzeigen, so daß die durch einen Stoß fehlerhaften Kreiselmessungen beim Nord-Bestimmungsvorgang unberücksichtigt bleiben können.
- Die Einsinkrate einer Trägervorrichtung (Stativ) wird während der Nord-Bestimmung gemessen und kann durch die Verarbeitungseinheit, die vorzugsweise durch einen Mikrocomputer implementiert ist, kompensiert werden.
- Ist das richtungsbestimmende Kreiselsystem mit einem optischen System (beispielsweise Theodoliten) verbunden, so liefert die über die Beschleunigungsmesser ermittelte Horizontreferenz die Eingangswerte zur Transformation der gemessenen Winkel in die Horizontale.
- Die Messungen können zur Verkürzung der Nord-Findungszeit ohne Vorheizung im temperaturtransienten Zustand vorgenommen werden. Meßfehler werden dann in an sich bekannter Weise über die Mehrpositions-Ausrichtung kompensiert.

Zur Bestimmung der Horizontreferenz können anstelle der Beschleunigungsmesser auch Elektrolytlibellen eingesetzt werden. Die Steuerung der Mehrpositions-Ausrichtung und die Auswertung erfolgt mittels eines Mikroprozessors.

Entsprechend dem aus der DE-B-31 41 405 bekannten Verfahren wird vorteilhafterweise eine sogenannte Dreipositionsmessung durchgeführt. Bei einer ersten Messung wird der Azimutwinkel ($\Psi$) zwischen einer Kreiselmeßachse und Nord in einer Ausgangsposition, bei einer zweiten Messung in einer um 180° um die Spinachse gedrehten Position der Azimutwinkel ($\Psi$ + 180°) zwischen der Kreiselmeßachse und Nord bestimmt und schließlich wird eine dritte Messung in der Ausgangsposition entsprechend der ersten Messung durchgeführt. Unter der Annahme und Vorgabe eines zeitlich exponentiellen Verlaufs der Kreiselmeßsignale wird in der Signalverarbeitungseinheit ein gewichtetes Mittel zwischen den Meßwerten der ersten und dritten Messung derart gebildet, daß die Mittelwerte weitgehend den Werten im Zeitraum der zweiten Messung entsprechen. In Abwandlung dieser an sich bekannten Dreipositionsmessung kann auch ganz allgemein eine vorzugsweise ungeradzahlige Anzahl von Messungen, beispielsweise eine Fünfpositionsmessung, durchgeführt werden, bei der in der Ausgangsposition dreimal und in der um 180° gedrehten Position zweimal gemessen wird. In der Signalaufnahme- und -verarbeitungseinheit wird dan ein gewichtetes Mittel zwischen der ersten, dritten und fünften Messung derart gebildet, daß diese Mittelwerte weitgehend den Mittelwerten aus der zweiten und vierten Messung entsprechen.

Diese Mittelwertbildung hinsichtlich der Meßwerte vom Kreiselsystem wird in analoger Weise auch auf die Meßwerte der Beschleunigungsmesser angewendet, wobei sich im Mittel dann eine wesentlich gesteigerte Genauigkeit und Meßsicherheit ergibt.

Die Erfindung und vorteilhafte Einzelheiten werden nachfolgend unter Bezug auf die Zeichnung in beispielsweiser Ausführungsform näher erläutert. Es zeigt:

Fig. 1 die Perspektivskizze eines erprobten Ausführungsbeispiels eines Kreiselkompaßsystems mit Horizontreferenzbestimmung gemäß der Erfindung;

Fig. 2 ein Systemblockschaltbild zur Erläuterung der elektronischen Verarbeitung von ermittelten Meßergebnissen; und

Fig. 3 den Aufbau eines Meßsystems mit einem Theodoliten, dessen Peilgrundlinie mit Hilfe des beschriebenen Verfahrens ermittelt wird.

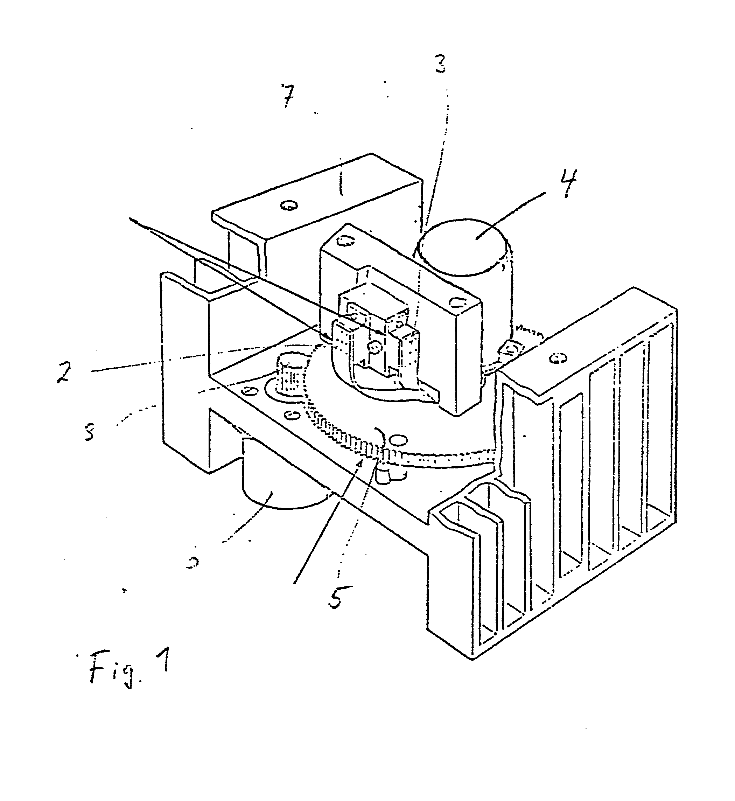

Die Perspektivskizze der Fig. 1 zeigt ein formstabiles Chassis 7, auf dem ein Drehteller 5 gelagert ist, der von einem Servomotor 6 über ein mit dessen Achse verbundenes Ritzel 8 angetrieben wird. Der Drehteller 5 trägt einen für Strapdown-Anwendung geeigneten Kreisel 4 an sich bekannter Bauart, dessen Kreiseldrallachse (Spinachse) vertikal ausgerichtet ist. Auf dem Drehteller 5 sind außer dem und in starrer Fixierung relativ zum Drehteller 5 und zum Kreiselkompaß 4 zwei einachsige lineare Beschleunigungsmesser 2 und 3 angeordnet, deren Meßachsen senkrecht zueinander und wenigstens ungefähr senkrecht zur Kreiseldrallachse ausgerichtet sind.

Die Beschleunigungsmesser 2, 3 ermitteln ständig die horizontale Lage selbst unter Kippbewegungen eines Trägers, beispielsweise eines Stativs 10, dessen Fuß (Füße) während des Meßvorgangs einsinken können. Gleichzeitig messen die Beschleunigungsmesser 2, 3 auftretende Stöße, die über die Auswertelogik eines als Mikrocomputer implementierten Digitalrechners 12 dazu führen, daß ein gerade laufender Zeittakt der Kreiselmessung nicht ausgewertet wird, sondern daß der Meßvorgang insgesamt um diesen entsprechenden Zeittakt verlängert wird. Die aufgrund der Beschleunigungsmessung erhaltene Horizontinformation kann über den Digitalrechner 12, insbesondere wenn das Meßgerät dehorizontiert aufgestellt wurde, dazu verwendet werden, die entsprechend der verkippten Aufstellung verkippt gemessenen Winkel in Höhenwinkel und Seitenwinkel umzurechnen, die auf die Horizontebene bezogen sind. Bei einer erprobten Ausführungsform war es ohne weiters zulässig, das Gerät in einem Winkelbereich von ca. ± 5° dehorizontiert aufzustellen.

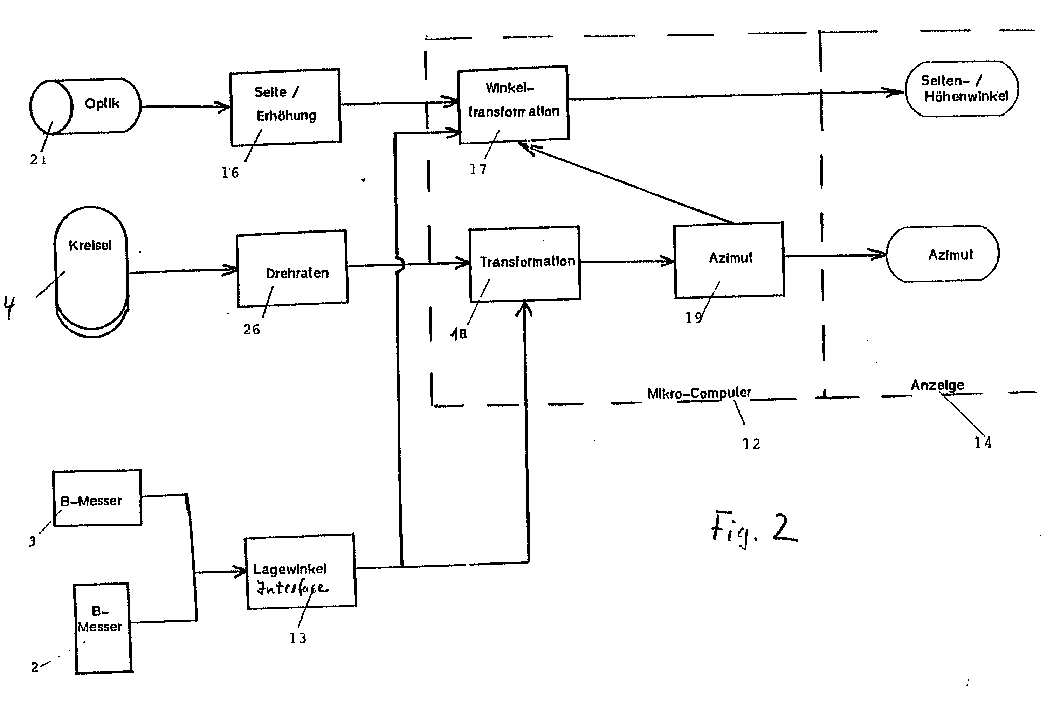

Das Systemblockschaltbild der Fig. 2 läßt die Verarbeitung der ermittelten Meßgrößen erkennen. Die mit den Beschleunigungsmessern 2, 3 ermittelten Signale dienen zur Bestimmung des Horizonts und werden über eine angeschlossenen Vorverarbeitungselektronik 13 als Lagewinkel (Kipp- und Kantwinkel) des Systems zur Transformation 18 der durch den Kreisel 1 über dessen Auswerteelektronik 26 gemessene Drehraten verwendet. Durch die Transformation 18 ergeben sich die Horizontalkomponenten der Erddrehrate. Nach bekannten mathematischen Methoden (vgl. beispielsweise DE-B-31 41 405) wird aus diesen Werten der wahre Azimut in der Recheneinheit 19 des Mikrocomputers 12 berechnet. Die aus der Einheit 13 erhaltene Lageinformation der Beschleunigungsmesser 2, 3 dient außerdem zur Transformation über eine Verarbeitungseinheit 17 auf ein horizontales Koordinatensystem der beispielsweise mit verkippten Drehachsen gemessenen Höhen- und Seitenwinkel 16 einer Optik 21. Alle Berechnungen und Transformationen erfolgen im Mikrocomputer 12. Die Ergebniswerte werden auf einer Anzeige 14 dargestellt.

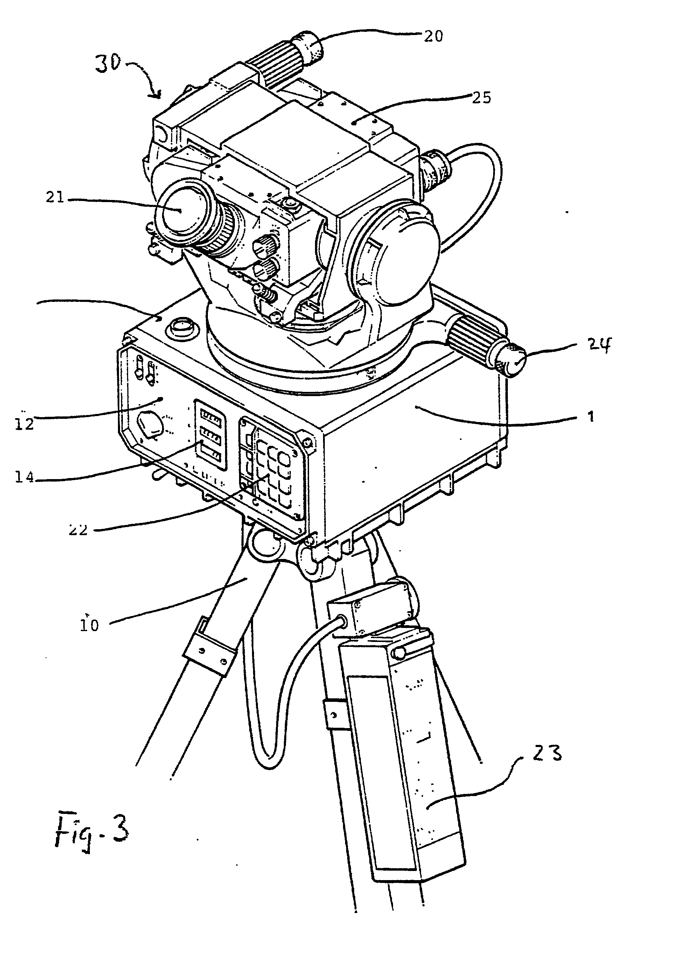

Die Fig. 3 läßt den konstruktiven Aufbau eines Meßsystems, insbesondere mit einem Theodoliten 30, erkennen. Das azimutbestimmende Gerät 1 ist vorteilhaft in einem auf einem Stativ 10 stationär befestigten Teil des Theodoliten 30 montiert. Bei dieser Art der Ausführung wird die freie Beweglichkeit des Theodoliten 30 auch während des Nordungsvorgangs nicht eingeengt. Es ist andererseits möglich, die Horizont- und Richtungsreferenz für den Theodoliten 30 zu ermitteln. Die im azimutbestimmenden Gerät 1 ermittelten Lagewinkel dienen zur Transformation der an der Azimutdrehachse 24 und der Elevationsdrehachse 20 eingestellten bzw. ermittelten Winkel in die Horizontale bzw. in die Vertikale. Die Koordinatentransformation erfolgt im eingebauten, als Mikrocomputer ausgeführten Digitalrechner 12. Auf dem Anzeigefeld 14 werden die Winkelwerte in korrigierter und horizontbezogener Form dargestellt.

Das Meßsystem gemäß Fig. 3 kann vorteilhafterweise mit einem Entfernungsmesser 25 mit Fernrohroptik 21 kombiniert sein. Es besteht dann die Möglichkeit, aus den ermittelten polaren Werten von Entfernung, Richtungswinkel und Höhenwinkel bei Anmessen eines hinsichtlich seiner geographischen Koordinaten bekannten Punkts bei Eingabe seiner Koordinaten den Standort des Geräts und über das Rechnersystem die Koordinaten automatisch zu ermitteln. Die Koordinateneingabe des bekannten Fixpunkts kann dann beispielsweise über eine digitale Tastatur 22 erfolgen. Das Meßsystem ist aus einer Batterie 23 gespeist und daher vollkommen autark einsetzbar.

Für den Benutzer des Geräts seien in Ergänzung zu den oben bereits erläuterten Vorteilen des erfindungsgemäßen Verfahrens noch einige besondere Verbesserungen nachgetragen:
- Das Gerät muß nicht fein-horizontiert aufgestellt werden, d. h. auch bei geringfügig verkanteter Aufstellung kann noch exakt gemessen werden.
- Das Gerät ist sehr störunanfällig, insbesondere im Vergleich zu Kreiselsystemen, die mit pendelnd oder kardanisch aufgehängten Kreiselsensoren arbeiten.

Mit dem Gerät können ohne das bisher erforderliche Einspielen eines Höhenindexes auch Höhenwinkel gemessen werden. Dies ist von besonderer Bedeutung, wenn bei verkanteter Aufstellung des Geräts genaue Anforderungen an die Höhenwinkelmessung gestellt werden. Im allgemeinen ist es dabei nämlich notwendig, bei einer Drehung im Azimutwinkel auch die Höhenwinkel-Nullstellung durch einen Höhenindex neu zu definieren. Diese Aufgabe läßt sich gemäß der Erfindung über die durch die Beschleunigungsmesser gelieferte Horizontreferenz automatisch vom Mikroprozessorsystem übernehmen.

**Patentansprüche**

1. Verfahren zur Azimut-Winkelbestimmung unter Verwendung eines für Strapdown-Anwendung geeigneten Kreisels (4), bei dem rechnergesteuert und automatisch durch eine erste Messung der Azimut-Winkel $\psi$ zwischen einer Kreiselmeßachse und Nord in einer Ausgangsposition, bei einer zweiten Messung in einer um 180° um die Kreiseldrallachse bzw. Spinachse gedrehten Position der Azimut-Winkel $\psi+180°$ zwischen der Kreiselmeßachse und Nord bestimmt und eine dritte Messung in der Ausgangsposition entsprechend der ersten Messung durchgeführt werden und anschließend unter der Annahme und Vorgabe eines zeitlich exponentiellen Verlaufs der Kreiselmeßsignale in einer Signalaufnahme- und Verarbeitungseinheit ein gewichtetes Mittel zwischen den Meßwerten der ersten und dritten Messung derart gebildet wird, daß die Mittelwerte weitgehend den Werten im Zeitraum der zweiten Messung entsprechen, dadurch gekennzeichnet, daß
- auf den Kreisel (4) wirkende Beschleunigungskräfte in zwei senkrecht zu einander und etwa senkrecht zur Kreiseldrallachse stehenden Richtungen gemessen werden,
- die Mittelwertbildung in analoger Weise auf die Meßwerte der Beschleunigungskräfte angewendet und die gemittelten Meßwerte zur Festlegung einer Horizontreferenz benutzt werden, und daß
- die gemessene und durch korrigierte Mittelwertbildung erhaltene Kreiselinformation auf der Grundlage der Horizontreferenz korrigiert wird.

2. Verfahren nach Anspruch 1, dadurch gekennzeichnet, daß zur Azimut-Winkelbestimmung eine Fünfpositionsmessung durchgeführt wird, daß unter der Annahme und Vorgabe eines zeitlich exponentiellen Verlaufs der Kreiselmeßsignale in der Signalaufnahme- und -verarbeitungseinheit ein gewichtetes Mittel zwischen der ersten, dritten und fünften Messung derart gebildet wird, daß diese Mittelwerte weitgehend den Mittelwerten aus der zweiten und vierten Messung entsprechen und daß die Mittelwertbildung in analoger Weise auf die Meßwerte der Beschleunigungskräfte angewendet wird.

3. Einrichtung zur Durchführung des Verfahrens nach Anspruch 1 oder 2, gekennzeichnet durch einen auf einem Drehtisch (5) fixierten zweiachsigen Kreisel (4) mit etwa senkrecht zur Erdoberfläche stehender Kreiseldrallachse bzw. Spinachse und mit einem rechnergesteuerten Servoantrieb (6) für den Drehtisch (5) sowie mit zwei ebenfalls auf dem Drehtisch (5) in zueinander senkrechter Anordnung befestigten linearen, einachsigen Beschleunigungsmessern (2, 3), die die in Anspruch 1 erwähnten Beschleunigungskräfte messen und deren Meßsignale über die Signalaufnahme- und -verarbeitungseinheit (13, 12) eine Horizontreferenz liefern.

4. Anwendung des Verfahrens nach Anspruch 1 oder 2 unter Verwendung einer Einrichtung nach Anspruch 3 zur Positionsbestimmung und Ausrichtung eines Vermessungsgeräts.

5. Anwendung nach Anspruch 4, dadurch gekennzeichnet, daß das Vermessungsgerät ein Theodolit ist und daß das Kreiselsystem mit Beschleunigungsmessern (2, 3) mit dem Theodoliten kombiniert ist.

6. Anwendung nach Anspruch 5, dadurch gekennzeichnet, daß bei Kombination des Theodoliten (30) mit einem Entfernungsmesser (8) beim Anmessen eines hinsichtlich seiner geographischen Koordinatenwerte bekannten Fixpunkts aus den ermittelten polaren Werten Entfernung, Richtungswinkel und Höhenwinkel, der Standort des Theodoliten und dessen Koordinaten über die Signalverarbeitungseinheit (12) automatisch ermittelt werden.

7. Anwendung nach Anspruch 4 oder 5, dadurch gekennzeichnet, daß die Signale der Beschleunigungsmesser (2, 3) hinsichtlich eventueller Vibrationsstörungen und/oder einer Verschieberate' des Stativs (10) des Vermessungsgeräts (30) detektiert und in der Signalverarbeitungseinheit (12) fehlerkompensiert werden.

8. Anwendung des Verfahrens nach Anspruch 3, dadurch gekennzeichnet, daß zwei in der Horizontalebene orthogonal zueinander angeordnete einachsige Elektrolytlibellen zur Messung der horizontalen Lage verwendet werden.

## Claims

1. Method for the determination of azimuth angle using a gyroscope (4) suitable for strap-down application, in which, in a computer-controlled and automatic manner, by means of a first measurement, the azimuth angle ψ between a gyroscope measurement axis and North is determined in an initial position, in a second measurement in a position rotated by 180° around the axis of rotation of the gyroscope or spin axis, the azimuth angle ψ+180° between the gyroscope measurement axis and North is determined and a third measurement is carried out in the initial position corresponding to the first measurement, and subsequently, assuming and specifying a variation of the gyroscope measurement signals which is exponential with time, a weighted mean is formed between the measured values of the first and third measurements in a signal recording and processing unit in such a way that the mean values substantially correspond to the values in the time interval of the second measurement, characterized in that

    – acceleration forces acting on the gyroscope (4) are mesured in two directions which are perpendicular to one another and approximately perpendicular to the axis of rotation of the gyroscope,

    – the mean value formation is applied in a similar manner to the measured values of the acceleration forces, and the averaged measured values are used to determine a horizon reference, and in that

    – the gyroscope information mesured and obtained by corrected mean value formation is corrected on the basis of the horizon reference.

2. Method according to Claim 1, characterized in that a five-position measurement is carried out for azimuth angle determination, in that, assuming and specifying a variation of the gyroscope measurement signals which is exponential with time, a weighted mean is formed between the first, third and fifth measurement in the signal recording and precessing unit in such a way that these mean values substantially correspond to the mean values from the second and fourth measurement, and in that the formation of the mean value is applied in an analogous manner to the measured values of the acceleration forces.

3. Device for carrying out the method according to Claim 1 or 2, characterized by a two-axis gyroscoope (4) fixed on a rotary table (5), the device having a gyroscope axis of rotation or spin axis located approximately at right angles to the surface of the Earth and having a computer-controlled servo-drive (6) for the rotating table (5) and having two linear, single-axis accelerometers (2, 3) which measure the acceleration forces mentioned in Claim 1 and are also fastened to the rotary table (5) and are in an arrangement at right angles to one another, the measurement signals of which accelerometers supply a horizon reference via the signal recording and processing unit (13, 12).

4. Application of the method according to Claim 1 or 2, using a device according to Claim 3 for determining the position of and aligning a surveying device.

5. Use according to Claim 4 characterized in that the surveying device is a theodolite, and in that the gyroscope system with accelerometers (2, 3) is combined with the theodolite.

6. Use according to Claim 5, characterized in that when the theodolite (30) is combined with a range finder (8), the location of the theodolite and its coordinates are determined automatically by means of the signal processing unit (12) from the polar values of distance, direction angle and elevation angle determined when surveying a fixed point whose geographical co-ordinates are known.

7. Use according to Claim 4 or 5, characterized in that the signals of the accelerometers (2, 3) are detected with respect to possible vibration interference and/or a displacement rate of the tripod (10) of the surveying device (30) and compensation for error is provided in the signal processing unit (12).

8. Application of the method according to Claim 3, characterized in that two single-axis electrolyte levels disposed orthogonally to one another in the horizontal plane are used to measure the horizontal position.

## Revendications

1. Procédé pour la détermination de l'angle azimutal avec utilisation d'un gyroscope (4) convenant pour une application strapdown qui, commandé par ordinateur et fonctionnant de manière automatique, détermine par une première mesure l'angle azimutal ($\psi$) entre un axe de mesure du gyroscope et le nord dans une position de départ et par une seconde mesure, dans une position décalée de 180° par rapport à l'axe du moment cinétique et respectivement à l'axe de spin, l'angle azimutal ($\psi$+180°) entre l'axe de mesure du gyroscope et le nord, et effectue une troisième mesure dans la position de départ conformément à la première mesure et forme ensuite, en admettant et en se basant sur une allure exponentielle du signal de mesure du gyroscope, une moyenne pondérée entre les valeurs mesurées des première et troisième mesures de telle façon que les valeurs moyennes correspondent dans une large mesure aux valeurs moyennes dans l'intervalle de temps de la seconde mesure, caractérisé en ce que

— les forces accélératrices agissant sur le gyroscope (4) sont mesurées dans deux directions perpendiculaires l'une à l'autre et sensiblement orthogonalement à l'axe du moment cinétique du gyroscope,

— la formation de la valeur moyenne est appliquée de manière analogue aux valeurs mesurées des forces accélératrices et que les valeurs moyennes des mesures sont utilisées pour la fixation d'une référence d'horizon, et que

— l'information gyroscopique mesurée et obtenue par la formation de la moyenne corrigée est corrigée sur la base de la référence d'horizon.

2. Procédé selon la revendication 1, caractérisé en ce que pour la détermination de l'angle azimutal est effectuée une mesure en cinq positions, que, en admettant et en se basant sur une allure exponentielle dans le temps des signaux gyroscopiques dans l'unité de réception et de traitement des signaux, une moyenne pondérée entre les première, troisième et cinquième mesures est formée de telle façon que ces valeurs moyennes correspondent dans une large mesure aux valeurs moyennes des deuxième et quatrième mesures, et que la formation de la valeur moyenne est appliquée de manière analogue aux valeurs mesurées pour les forces accélératrices.

3. Dispositif pour la mise en œuvre du procédé selon l'une des revendications 1 ou 2, caractérisé en ce qu'il comprend un gyroscope à deux axes (4) fixé sur une platine tournante (5), avec l'axe du moment cinétique et respectivement l'axe de spin du gyroscope orienté sensiblement perpendiculairement à la surface terrestre et avec une servocommande (6) commandée par ordinateur pour la platine tournante (5) ainsi qu'avec deux accéléromètres (2, 3) linéaires uniaxes également fixés sur la platine tournante (5) dans une disposition orthogonale lesquels mesurent les forces accélératrices mentionnées dans la revendication 1 et dont les signaux de mesure fournissent une référence d'horizon par l'intermédiaire de l'unité de réception et de traitement des signaux (13, 12).

4. Application du procédé selon l'une des revendications 1 ou 2, avec utilisation d'un dispositif selon la revendication 3 pour la détermination de position et pour l'alignement d'un appareil topographique.

5. Application selon la revendication 4, caractérisée en ce que l'appareil topographique est un théodolite et que le système gyroscopique comprenant des accéléromètres (2, 3) est combiné avec le théodolite.

6. Application selon la revendication 5, caractérisée en ce que, en cas de combinaison du théodolite (30) avec un télémètre (8), la mesure d'un point fixe dont les coordonnées géographiques sont connues permet, à partir des valeurs polaires déterminées pour la distance, l'angle de direction et l'angle d'élévation, de déterminer automatiquement l'emplacement du théodolite et ses coordonnées par l'intermédiaire de l'unité de traitement des signaux (12).

7. Application selon l'une des revendications 4 ou 5, caractérisée en ce que les signaux des accéléromètres (2, 3) sont détectés pour déceler des vibrations perturbatrices éventuelles et/ou un taux de déplacement du trépied (10) de l'appareil topographique (30) et que les erreurs sont compensées dans l'unité de traitement des signaux (12).

8. Application du procédé selon la revendication 3, caractérisée en ce que deux nivelles électrolytiques uniaxes sont disposées orthogonalement l'une à l'autre dans le plan horizontal pour mesurer la position horizontale.

Fig. 1

Fig. 2

EP 0 250 608 B1

Fig. 3